# EUROPÄISCHE PATENTSCHRIFT

(11) **EP 2 917 075 B1**
(45) Veröffentlichungstag und Bekanntmachung des Hinweises auf die Patenterteilung: **31.01.2018**
(21) Anmeldenummer: 13792868.5
(22) Anmeldetag: 07.11.2013
(51) Int. Cl.: B60R 21/015, G01S 17/02, B60K 35/00

(54) **DETEKTIONSVORRICHTUNG ZUR DETEKTION EINES GEGENSTANDS IN EINEM DETEKTIONSBEREICH AN EINEM INNENVERKLEIDUNGSTEIL EINES KRAFTFAHRZEUGS, KRAFTFAHRZEUG UND ENTSPRECHENDES VERFAHREN**
DETECTION DEVICE FOR DETECTING AN OBJECT IN A DETECTION RANGE ON AN INTERIOR TRIM PART OF A MOTOR VEHICLE, MOTOR VEHICLE AND CORRESPONDING METHOD
DISPOSITIF DE DÉTECTION SERVANT À DÉTECTER UN OBJET DANS UNE ZONE DE DÉTECTION SUR UNE PARTIE D'HABILLAGE INTÉRIEUR D'UN VÉHICULE AUTOMOBILE, VÉHICULE AUTOMOBILE ET PROCÉDÉ CORRESPONDANT

(30) Priorität: 08.11.2012 DE 102012021972
(43) Veröffentlichungstag der Anmeldung: 16.09.2015
(73) Patentinhaber: Valeo Schalter und Sensoren GmbH, 74321 Bietigheim-Bissingen (DE)
(72) Erfinder: KUNTZE, Daniel, 74321 Bietigheim-Bissingen (DE); SCHOCH, Lars, 73630 Remshalden (DE); SIMONIS, Karl, 75428 Illingen (DE); WILDT, Marcus, 07368 Remptendorf (DE)
(86) Internationale Anmeldenummer: PCT/EP2013/073290
(87) Internationale Veröffentlichungsnummer: WO 2014/072421

(56) Entgegenhaltungen:
- EP-A2- 1 114 756
- WO-A1-01/72557
- DE-A1-102009 016 052
- GB-A- 2 236 419
- JP-A- H10 157 563

## Beschreibung

Die Erfindung betrifft eine Detektionsvorrichtung zur Detektion eines Gegenstands in einem Detektionsbereich an und/oder über einem Innenverkleidungsteil eines Kraftfahrzeugs im Bereich einer Austrittsöffnung, insbesondere im Bereich einer Öffnung für Lichtstrahlen eines Head-Up-Displays und/oder einer Öffnung für einen Airbag. Die Vorrichtung weist einen Detektionsbereich auf, in welchem der Gegenstand in einer Erfassungsrichtung detektiert wird. Die Erfindung betrifft außerdem ein Kraftfahrzeug mit einer solchen Detektionsvorrichtung, nämlich insbesondere einen Personenkraftwagen, sowie ein entsprechendes Verfahren.

Das Interesse richtet sich vorliegend insbesondere auf eine Detektionsvorrichtung, welche zur Detektion von Gegenständen ausgebildet ist, die sich im Bereich der Armaturentafel eines Kraftfahrzeugs befinden, nämlich im Bereich einer Austrittsöffnung für Lichtstrahlen eines Head-Up-Displays oder aber für einen Airbag. Solche Gegenstände können gegebenenfalls eine Gefahr für die Fahrzeuginsassen darstellen. Sie sind beispielsweise dann gefährlich, wenn sie im Bereich eines Airbags liegen. Deshalb soll das Auslösen des Airbags bei Vorhandensein eines Gegenstands auf der Armaturentafel verhindert werden. Andererseits können auf der Armaturentafel befindliche Gegenstände auch deshalb gefährlich sein, weil sie die Laserstrahlen eines Head-up-Displays umlenken und beispielsweise auf die Fahrzeuginsassen ausrichten können. Bei Laserstrahlung besteht nämlich die Gefahr von Augen- oder Hautverletzungen durch Reflektion an Gegenständen, die sich im Bereich zwischen der Armaturentafel und der Windschutzscheibe befinden.

Die Schrift GB 2236419 A offenbart eine Detektionsvorrichtung zur Detektion von Gegenständen innerhalb eines Fahrzeugs im Bereich zwischen einem Airbag und einem Beifahrersitz. Sobald hier ein Gegenstand detektiert wird, kann ein Alarmsignal ausgegeben werden.

Aus der EP 1114756 A2 ist ein Detektionssystem bekannt, welches die Position der Fahrzeuginsassen mittels einer Sensoreinrichtung erkennt und die Airbag-Funktion entsprechend aktivieren oder deaktivieren kann.

Die WO 01/72557 A1 beschreibt eine Vorrichtung und ein Verfahren zum Erfassen eines Objekts oder einer Person im Fahrgastraum eines Fahrzeugs. Es wird mindestens ein Laserlichtimpuls emittiert. Der Laserlichtpuls, der auf einem Objekt oder einer Person reflektiert wird, wird empfangen. Die Empfangsleistung wird permanent erkannt. Der Laserlichtimpuls wird abgeschaltet, wenn ein Schwellenwert erreicht wird, der mit einer ausreichenden Empfangsleistung übereinstimmt.

Aus der JP H10157563 A ist ein Objekterfassungssensor bekannt, welcher einen Lichtstrahl emittiert und zwar nacheinander zu den mehreren Raumrichtungen zwischen einem Beifahrersitz und einem Armaturenbrett. Der Sensor empfängt die reflektierte Lichtmenge zu jedem Lichtstrahl und erkennt die Existenz eines Objekts innerhalb eines Airbag-Inflationsbereichs ist. Dieses Erfassungssignal wird einem Stromversorgungsumschalter zugeführt, und die Zufuhr einer Fahrzeugstromquelle wird von einer Airbag-Treiberschaltung zu einer Warnausgangsschaltung geschaltet.

Die DE 102009016052 beschreibt ein Gerät, welches über einen Detektor verfügt, der in einem Bereich eines Bodens eines Kraftfahrzeugs auf die Fußbewegung einer Person reagiert, wobei dieser Detektor auf den Boden gerichtet ist. Der Detektor ist fotooptisch und arbeitet mit unsichtbarem Licht. Der Detektor wird aktiviert, sobald eine Tür geöffnet wird, wobei die Lichtempfänger in einem Bereich einer B-Säule und einer A-Säule befestigt sind.
Eine Detektionsvorrichtung zur Detektion von Gegenständen im Bereich eines Airbags ist beispielsweise aus dem Dokument EP 1 012 007 B1 bekannt. Es wird hier ein Abstandssensor an der Armaturentafel eingesetzt, welcher den Abstand zum Fahrzeuginsassen misst. Befindet sich zwischen den Fahrzeuginsassen und dem Airbag ein Gegenstand, so kann dies anhand von Signalen des Abstandssensors detektiert werden, und der Airbag kann gegebenenfalls deaktiviert werden.

Aus dem Dokument GB 2 301 922 A ist ein System zur Überwachung des Innenraums eines Kraftfahrzeugs bekannt. Es wird eine Vielzahl von Sensoren einschließlich Ultraschallsensoren sowie CCD-Sensoren eingesetzt, welche den Innenraum des Fahrzeugs überwachen. Anhand von Sensordaten kann auch der Müdigkeitsgrad des Fahrers detektiert werden.

Die im Stand der Technik vorgeschlagenen Abstandssensoren zur Detektion von Gegenständen haben insbesondere den Nachteil, dass der Detektionsbereich, in welchem die Gegenstände detektiert werden sollen, nur unpräzise vorgegeben bzw. definiert werden kann. Zwar kann der Detektionsbereich durch eine maximale Entfernung definiert werden, bis zu welcher ein Objekt als Gegenstand und nicht als Fahrzeuginsasse interpretiert wird, wie dies beispielsweise in dem genannten Dokument EP 1 012 007 B1 vorgeschlagen wird, jedoch ist die Vorgabe eines konkreten, spezifischen Detektionsbereichs auf der Armaturentafel bzw. dem Armaturenbrett nicht oder nur unpräzise möglich.

Im Stand der Technik ist außerdem die Überwachung der gesamten Austrittsöffnung nicht möglich. So kann im Dokument EP 1 012 007 B1 ein Gegenstand nur dann detektiert werden, wenn er innerhalb des Sichtfelds des Ultraschallsensors liegt. Neben des Sichtfelds befindliche und den Airbag abdeckende Gegenstände können nicht detektiert werden.

Es ist Aufgabe der Erfindung, eine Lösung aufzuzeigen, wie bei einer Detektionsvorrichtung der eingangs genannten Gattung der Detektionsbereich, in welchem die Gegenstände detektiert werden sollen, besonders präzise und ganz gezielt vordefiniert und der gesamte Bereich der Austrittsöffnung überwacht werden können.

Diese Aufgabe wird erfindungsgemäß durch ein Innenverkleidungsteil, durch ein Kraftfahrzeug sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren. Ein erfindungsgemäßes Innenverkleidungsteil eines Kraftfahrzeugs mit einer Detektionsvorrichtung ist zur Detektion eines an und/oder über dem Innenverkleidungsteil im Bereich einer im Innenverkleidungsteil ausgebildeten Austrittsöffnung befindlichen Gegenstandes ausgebildet, insbesondere eines Gegenstands, welcher auf dem Verkleidungsteil abgelegt ist und bevorzugt die Austrittsöffnung zumindest bereichsweise überdeckt. Die Detektionsvorrichtung hat einen Detektionsbereich, in welchem der Gegenstand in einer Erfassungsrichtung der Detektionsvorrichtung detektierbar ist, wobei die Erfassungsrichtung zumindest im Wesentlichen parallel zu einer Öffnungsebene der Austrittsöffnung verläuft. Die Erfassungsrichtung kann dabei in der Öffnungsebene oder versetzt dazu und parallel dazu verlaufen.

Unter einer "Erfassungsrichtung" wird vorliegend eine Detektionsrichtung verstanden, in welche Sensorsignale der Detektionsvorrichtung ausgesendet bzw. ein Detektionsfeld erzeugt wird. Die Erfassungsrichtung fällt somit mit einer Sensorachse zusammen, welche die Haupterfassungsrichtung definiert.

Durch eine derartige Detektionsvorrichtung können Objekte zuverlässig detektiert werden, welche die Austrittsöffnung zumindest bereichsweise überdecken und somit eine potentielle Gefahr darstellen. Außerdem kann der Detektionsbereich somit sehr präzise vorgegeben und definiert werden.

Der Detektionsbereich ist vorzugsweise derart ausgebildet, dass er die Austrittsöffnung zumindest überwiegend, insbesondere vollständig, überdeckt.

Ferner kann vorgesehen sein, dass die Austrittsöffnung eine Öffnung für Strahlen eines Head-Up-Displays und/oder eine Öffnung für einen Airbag ist. Somit können die Insassen zuverlässig geschützt werden.

In einer Ausführungsform umfasst die Vorrichtung zumindest ein Elementenpaar aus einem Sendeelement und einem Empfangselement. Das Sendeelement ist zum Aussenden elektromagnetischer Strahlen in den Detektionsbereich ausgebildet. Das Empfangselement ist zum Empfangen zumindest eines Teils der Strahlen und zum Bereitstellen eines elektrischen Sensorsignals abhängig von den empfangenen Strahlen ausgebildet. Die Detektionsvorrichtung umfasst außerdem eine elektronische Auswerteeinrichtung, welche abhängig von dem Sensorsignal den Gegenstand im Detektionsbereich detektieren kann. Das Sendeelement ist bevorzugt zum Aussenden der Strahlen entlang eines den Detektionsbereich definierenden vorgegebenen Strahlengangs hin zum Empfangselement ausgebildet, wobei die Strahlen den Detektionsbereich entlang des vorgegebenen Strahlengangs nur dann durchlaufen und auf das Empfangselement einfallen, falls sich kein Gegenstand im Strahlengang befindet. Demnach ist die Detektionsvorrichtung bevorzugt nach Art einer Lichtschranke ausgebildet, mittels welcher das Vorhandensein eines Gegenstands im Detektionsbereich zuverlässig detektiert werden kann. Befindet sich der Gegenstand im Strahlengang zwischen dem Sendelement und dem Empfangselement, so gelangen die Strahlen nicht zum Empfangselement, was mittels der elektronischen Auswerteeinrichtung anhand des Sensorsignals erkannt werden kann. Befindet sich im Strahlengang hingegen kein Gegenstand, so durchlaufen die Strahlen ungestört den vorgegebenen Strahlengang bis hin zum Empfangselement, welches die Strahlen empfängt. Auf diese Art und Weise kann der Detektionsbereich, in welchem die Gegenstände an dem Innenverkleidungsteil des Kraftfahrzeugs detektiert werden sollen, besonderes präzise und hochgenau vordefiniert werden, nämlich durch entsprechende Anordnung des Sendeelements und des Empfangselements relativ zueinander bzw. durch entsprechende Gestaltung des Strahlengangs.

Der Strahlengang definiert somit die Erfassungsrichtung der Detektionsvorrichtung, so dass die Erfassungsrichtung durch den Strahlengang vorgegeben ist.

Das zumindest eine Sendeelement kann zum Erzeugen der Strahlen in vom Menschen sichtbarem oder unsichtbarem Spektralbereich ausgebildet sein. Bevorzugt sendet das Sendelement Strahlen im unsichtbaren Spektralbereich aus. Die Frequenz der Strahlen kann beispielsweise im infraroten Spektralbereich liegen, so dass das Sendeelement zum Aussenden von Infrarot-Strahlen ausgebildet ist. Die ausgesendeten Strahlen können auch Laserstrahlen sein.

Das zumindest eine Empfangselement kann insbesondere als Fotodiode oder aber als Fototransistor ausgebildet sein.

Die Erfindung ist jedoch nicht auf eine optische Vorrichtung beschränkt. Die Detektionsvorrichtung kann auch eine kapazitive und/oder eine resistive und/oder eine antennen-basierte und somit mit hochfrequenten Signalen arbeitende Vorrichtung sein.

In einer Ausführungsform erstreckt sich der vorgegebene Strahlengang entlang einer Oberfläche des Innenverkleidungsteils, insbesondere auch parallel zur Oberfläche des Verkleidungsteils. Somit verläuft der Strahlengang zwischen dem Sendeelement und dem Empfangselement quasi über dem Verkleidungsteil, so dass Gegenstände zuverlässig detektiert werden können, die sich an dem Innenverkleidungsteil befinden. Der Detektionsbereich kann somit ohne viel Aufwand durch Vorgabe der Länge des Strahlengangs definiert werden.

Die Detektionsvorrichtung ist bevorzugt zur Detektion des Gegenstands an einer Armaturentafel als Innenverkleidungsteil ausgebildet. Somit ist es möglich, Gegenstände zu erfassen, die sich im Bereich eines Airbags befinden oder aber im Bereich eines Head-up-Displays liegen und somit eine potentielle Gefahr für die Fahrzeuginsassen darstellen. Es kann auch vorgesehen sein, dass die Detektionsvorrichtung in einer Vertiefung der Armaturentafel angeordnet ist.

Bevorzugt ist der Detektionsbereich ein Bereich zwischen der Armaturentafel einerseits und einer Windschutzscheibe des Kraftfahrzeugs andererseits. Insbesondere in diesem Bereich befindliche Gegenstände können eine potentielle Gefahr darstellen, wenn sie die Laserstrahlen eines Head-up-Displays reflektieren und in Richtung zu den Fahrzeuginsassen umlenken. Solche Gegenstände können nun mit Hilfe der Detektionsvorrichtung detektiert und ein Head-up-Display beispielsweise kurzzeitig deaktiviert werden.

Die elektronische Auswerteeinrichtung kann nach Detektion des Gegenstands in dem Detektionsbereich verschiedenste Vorgänge im Kraftfahrzeug automatisch bewirken. Sie kann beispielsweise ein Steuersignal erzeugen, aufgrund dessen zumindest eine Komponente des Kraftfahrzeugs deaktiviert wird, nämlich insbesondere eine Projektionsanzeigeeinrichtung (Head-up-Display) und/oder ein Airbag. Ergänzend oder alternativ kann die Auswerteeinrichtung bewirken, dass ein Warnsignal mittels einer optischen und/oder akustischen Ausgabeeinrichtung im Innenraum des Kraftfahrzeugs ausgegeben wird. Einerseits werden somit die Fahrzeuginsassen zuverlässig geschützt; andererseits kann der Fahrer des Kraftfahrzeugs vor der potentiellen Gefahr gewarnt werden.

In einer Ausführungsform sind ein genanntes Sendeelement und ein genanntes Empfangselement einander gegenüber in direkter Sichtverbindung (Line of Sight) angeordnet, so dass der vorgegebene Strahlengang geradlinig verläuft. Bei dieser Ausführungsform ist der vorgegebene Strahlengang frei von Soll-Reflexionsstellen, und die Strahlen breiten sich direkt von dem Sendeelement hin zum Empfangselement aus, ohne dass sie dazwischen reflektiert werden. Die Ausbreitung erfolgt bevorzugt über Luft. Dieses Elementenpaar ist somit nach Art einer Gabellichtschranke ausgebildet und ermöglicht eine zuverlässige Detektion des Gegenstands zwischen dem Sendeelement und dem Empfangselement. Diese Ausführungsform erweist sich insbesondere dann als vorteilhaft, wenn die Entfernung zwischen dem Sendeelement einerseits und dem Empfangselement andererseits relativ groß und somit der Detektionsbereich selbst relativ breit sind.

Ergänzend oder alternativ kann auch ein Elementenpaar aus einem Sendeelement und einem Empfangselement eingesetzt werden, welche keine direkte Sichtverbindung (Non-Line of Sight) aufweisen. Bei dieser Ausführungsform kann die Detektionsvorrichtung ein Reflektionselement zum Umlenken der Strahlen in Richtung zum Empfangselement aufweisen. Durch eine solche Umlenkung der Strahlen kann mit einem Elementenpaar insgesamt ein größerer Flächenbereich abgedeckt und überwacht werden. Das Elementenpaar ist hier nach Art einer Reflexlichtschranke ausgebildet. Das Sendeelement und das Empfangselement können dabei auf der gemeinsamen Seite des Detektionsbereichs angeordnet sein, während auf der gegenüberliegenden Seite des Detektionsbereichs das Reflektionselement angeordnet sein kann, mittels welchem die Strahlen des Sendeelements in Richtung zum Empfangselement umgelenkt werden.

Es kann auch vorgesehen sein, dass die Detektionsvorrichtung nach Art eines Lichtvorhangs ausgebildet ist und eine Vielzahl von Elementenpaaren jeweils aus einem Sendeelement und einem Empfangselement aufweist. Zwischen dem Sendeelement und dem Empfangselement jedes Elementenpaares kann jeweils ein Strahlengang von dem Sendeelement hin zum Empfangselement vorgegeben sein, so dass die Strahlen den Detektionsbereich entlang des jeweiligen vorgegebenen Strahlengangs nur dann durchlaufen und auf das jeweilige Empfangselement einfallen, falls sich kein Gegenstand im jeweiligen Strahlengang befindet. Auf diese Art und Weise kann ein sehr großer Flächenbereich des Innenverkleidungsteils im Hinblick auf Gegenstände überwacht werden.

Bevorzugt liegen die Strahlengänge der Vielzahl von Elementenpaaren in einer gemeinsamen Ebene und/oder parallel zur Oberfläche des Innenverkleidungsteils. Die Größe des Detektionsbereichs an dem Innenverkleidungsteil kann somit hochgenau und ohne viel Aufwand vordefiniert werden.

In einer Ausführungsform verlaufen die Strahlengänge der Vielzahl von Elementenpaaren parallel zueinander. Auf diese Weise kann eine hohe und homogene Auflösung der Detektionsvorrichtung in dem Detektionsbereich ermöglicht werden, und selbst sehr kleine Gegenstände können somit zuverlässig detektiert werden.

Die Sendeelemente der Vielzahl von Elementenpaaren liegen bevorzugt auf einer gemeinsamen gedachten und geraden Linie. Ergänzend oder alternativ können auch die Empfangselemente der Vielzahl von Elementenpaaren auf einer gemeinsamen Geraden liegen. Die beiden Geraden können miteinander zusammenfallen oder in einem Abstand zueinander angeordnet sein. Liegen sowohl die Sendeelemente als auch die Empfangselemente auf einer gemeinsamen Geraden, so werden bevorzugt Reflexionselemente eingesetzt, welche zum Umlenken der jeweiligen Strahlen in Richtung zu den jeweiligen Empfangselementen dienen. Sind die Empfangselemente gegenüber den Sendeelementen angeordnet, so ergibt sich eine direkte Sichtverbindung, und es kann auf entsprechende Reflexionselemente verzichtet werden.

Die Detektionsvorrichtung umfasst bevorzugt zwei einander gegenüberliegende, insbesondere länglich ausgeführte und bevorzugt auch geradlinige, Bauteile. Diese beiden Bauteile können beispielsweise parallel zueinander angeordnet sein. Das zumindest eine Sendeelement, insbesondere die Vielzahl von Sendeelementen, ist in ein erstes der Bauteile integriert, während das zumindest eine Empfangselement, insbesondere die Vielzahl von Empfangselementen, in ein zweites der Bauteile oder aber in das erste Bauteil integriert ist. Die Empfangselemente können also in das gleiche Bauteil wie die Sendeelemente oder aber in das andere Bauteil integriert sein. Bei einem Lichtvorhang nach Art einer Gabellichtschranke sind die Sendeelemente bevorzugt in das erste Bauteil integriert, während die Empfangselemente in das gegenüberliegende zweite Bauteil integriert sind. Bei einem Lichtvorhang nach Art einer Reflexlichtschranke sind hingegen sowohl die Sendeelemente als auch die Empfangselemente in das erste Bauteil integriert, während an dem zweiten Bauteil zumindest ein Reflexionselement beispielsweise in Form eines Spiegels angeordnet sein kann. Durch Bereitstellung der beiden Bauteile können das Sendeelement und das Empfangselement und gegebenenfalls auch das Reflexionselement stabil an dem Innenverkleidungsteil angebracht bzw. platziert werden.

In einer Ausführungsform umfasst die Detektionsvorrichtung zumindest ein zusätzliches Elementenpaar aus einem zusätzlichen Sendeelement und einem zusätzlichen Empfangselement. Das zusätzliche Sendeelement kann zum Aussenden elektromagnetischer Strahlen unter einem Winkel größer 0° bezüglich des oben genannten vorgegebenen Strahlengangs, insbesondere bezüglich einer die Vielzahl von Strahlengängen umfassenden Ebene, ausgebildet sein. Das zusätzliche Empfangselement kann dabei die durch das zusätzliche Sendeelement ausgesendeten Strahlen dann empfangen, falls diese Strahlen an dem Gegenstand reflektiert und zum Empfangselement umgelenkt werden. Das zusätzliche Sendeelement ist bevorzugt zum Aussenden der Strahlen unter einem Winkel größer 0° bezüglich der Oberfläche des Innenverkleidungsteils ausgebildet. Durch ein derartiges zusätzliches Elementenpaar können auch Gegenstände detektiert werden, die sich über dem Innenverkleidungsteil befinden, wobei durch entsprechende Einstellung des genannten Winkels auch die Höhe definiert werden kann, bis zu welcher die Gegenstände über dem Innenverkleidungsteil detektiert werden können. Das zusätzliche Sendeelement ist bevorzugt in das eine Bauteil integriert, während das zusätzliche Empfangselement vorzugsweise in das andere Bauteil integriert ist. Insbesondere sind auch eine Vielzahl von zusätzlichen Elementenpaaren jeweils umfassend ein zusätzliches Sendeelement und ein zusätzliches Empfangselement vorgesehen. Die zusätzlichen Sendeelemente können mit den "normalen" Sendeelementen abwechselnd verteilt angeordnet sein, nämlich beispielsweise entlang einer gedachten Geraden. Auch die zusätzlichen Empfangselemente können mit den "normalen" Empfangselementen auf einer gemeinsamen Geraden verteilt angeordnet sein.

Die Erfindung betrifft auch ein Kraftfahrzeug, insbesondere einen Personenkraftwagen, mit einer erfindungsgemäßen Detektionsvorrichtung.

Die Erfindung betrifft auch ein entsprechendes Verfahren zur Detektion eines Gegenstands in einem Detektionsbereich an und/oder über einem Innenverkleidungsteil eines Kraftfahrzeugs.

Die mit Bezug auf die erfindungsgemäße Detektionsvorrichtung vorgestellten bevorzugten Ausführungsformen und deren Vorteile gelten entsprechend für das erfindungsgemäße Kraftfahrzeug sowie für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand bevorzugter Ausführungsbeispiele sowie unter Bezugnahme auf die beigefügten Zeichnungen näher erläutert.

Es zeigen:
- Fig. 1: in schematischer Darstellung eine Draufsicht auf eine Detektionsvorrichtung gemäß einer ersten Ausführungsform der Erfindung;
- Fig. 2: in schematischer Darstellung eine Draufsicht auf eine Detektionsvorrichtung gemäß einer zweiten Ausführungsform der Erfindung;
- Fig. 3: in schematischer Darstellung eine Draufsicht auf eine Detektionsvorrichtung gemäß einer dritten Ausführungsform der Erfindung;
- Fig. 4: in schematischer und perspektivischer Darstellung die Detektionsvorrichtung gemäß Fig. 3;
- Fig. 5: in schematischer und perspektivischer Darstellung die Detektionsvorrichtung gemäß Fig. 4, wobei sich ein Gegenstand über der Detektionsvorrichtung befindet; und
- Fig. 6: in schematischer Darstellung die Detektionsvorrichtung gemäß Fig. 4, welche in ein Innenverkleidungsteil eines Kraftfahrzeugs integriert ist.

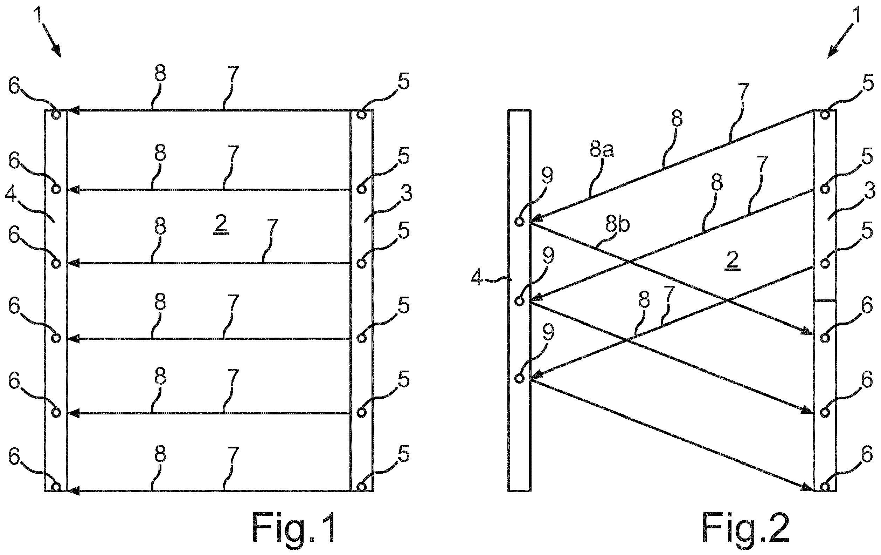

Eine in Fig. 1 dargestellte elektronische Detektionsvorrichtung 1 ist zu Detektion eines Gegenstandes in einem Detektionsbereich 2 ausgebildet. Die Detektionsvorrichtung 1 umfasst zwei Bauteile 3, 4, welche die Funktion eines Gehäuses bzw. Trägers zum Unterbringen bzw. Tragen von Funktionskomponenten der Detektionsvorrichtung 1 aufweisen. Die Bauteile 3, 4 sind im Ausführungsbeispiel länglich ausgeführt und in Form von Balken bzw. Stiften bereitgestellt. Die geradlinig ausgebildeten Bauteile 3, 4 sind parallel zueinander und in einem Abstand zueinander angeordnet, wobei der Detektionsbereich 2 zwischen den Bauteilen 3, 4 ausgebildet ist und sich einerseits von dem ersten Bauteil 3 bis hin zum zweiten Bauteil 4 andererseits erstreckt. Die Breite des Detektionsbereichs 2 entspricht somit dem Abstand zwischen den Bauteilen 3, 4. Die Länge des Detektionsbereichs 2 hingegen entspricht der Länge der Bauteile 3, 4. Der Detektionsbereich 2 ist folglich im Ausführungsbeispiel ein rechteckiger Bereich.

Das erste Bauteil 3 beinhaltet eine Vielzahl von in Fig. 1 schematisch dargestellten Sendeelementen 5, welche zum Erzeugen elektromagnetischer Strahlen im sichtbaren oder unsichtbaren Spektralbereich ausgebildet sind. Die Sendeelemente 5 können beispielsweise Dioden, insbesondere Laserdioden, sein. Die Sendeelemente 5 sind entlang des ersten Bauteils 3 auf einer gemeinsamen Geraden äquidistant verteilt angeordnet, so dass die Abstände zwischen jeweils zwei benachbarten Sendeelementen 5 gleich sind.

An dem zweiten Bauteil 4 hingegen ist eine entsprechende Vielzahl von Empfangselementen 6 angeordnet, welche zum Empfangen der Strahlen ausgebildet sind. Die Empfangselemente 6 können beispielsweise Fotodioden sein. Die Empfangselemente 6 sind ebenfalls auf einer gemeinsamen Geraden äquidistant verteilt angeordnet, so dass die Abstände zwischen jeweils zwei benachbarten Empfangselementen 6 gleich groß sind. Jedem Sendeelement 5 ist dabei ein separates Empfangselement 6 zugeordnet, welches gegenüber dem zugeordneten Sendeelement 5 angeordnet ist. Jedes Sendeelement 5 sendet Lichtstrahlen 7 in Richtung senkrecht zu den Bauteilen 3, 4 sowie in Richtung zu dem zugeordneten Empfangselement 6 aus, wobei die Strahlen 7 den Detektionsbereich 2 entlang jeweils eines vorgegebenen Strahlengangs 8 durchlaufen. Der Strahlengang 8 stellt dabei eine Erfassungsrichtung der Detektionsvorrichtung dar. Das Ausbreitungsmedium zwischen den Bauteilen 3, 4 ist Luft. Die Strahlengänge 8 sind dabei geradlinige Strecken bzw. Direktwege zwischen dem jeweiligen Sendeelement 5 und dem zugeordneten Empfangselement 6. Im Ausführungsbeispiel gemäß Fig. 1 stehen die Sendeelemente 5 einerseits mit den zugeordneten Empfangselementen 6 andererseits in direkter Sicherverbindung, die auch als "Line of Sight" bezeichnet wird. Dies bedeutet, dass in den Strahlengängen 8 keine zusätzlichen Soll-Reflexionsstellen vorhanden sind und die Strahlen 7 gegebenenfalls nur an Gegenständen reflektiert werden können, welche durch die Detektionsvorrichtung 1 detektiert werden sollen. Die gebündelten Strahlen 7 gelangen somit zu dem jeweiligen Empfangselement 6 nur unter der Voraussetzung, dass sich kein Gegenstand in dem jeweiligen Strahlengang 8 befindet. Liegt in dem Detektionsbereich 2 hingegen ein solcher Gegenstand, so wird zumindest einer der Strahlengänge 8 unterbrochen, und zumindest eines der Empfangselemente 6 empfängt keine Strahlen. Dies wird mit Hilfe einer elektronischen Auswerteeinrichtung (nicht dargestellt), insbesondere eines Mikroprozessors, anhand von Sensorsignalen der Empfangselemente 6 detektiert.

Die Detektionsvorrichtung 1 kann besonders bevorzugt in eine Armaturentafel eines Personenkraftwagens integriert werden. Sie kann beispielsweise in eine Vertiefung von einigen wenigen Millimetern in der Armaturentafel eingebettet werden. Dann können Gegenstände detektiert werden, welche an der Armaturentafel im Bereich zwischen der Tafel und der Windschutzscheibe angeordnet sind. Der Detektionsbereich 2 liegt dann vorzugsweise direkt über einer Austrittsöffnung oder direkt in der Ebene der Austrittsöffnung und überdeckt somit zumindest überwiegend die Austrittsöffnung. Die Öffnung ist bevorzugt diejenige Öffnung, durch welche Lichtstrahlen eines Head-Up-Displays ausgesendet werden. Gegebenenfalls können die Bauteile 3, 4 auch gekrümmt ausgebildet sein und somit an die geometrische Form der Tafel angepasst werden. Sie erstrecken sich jedoch bevorzugt derart relativ zueinander, dass stets eine direkte Sichtverbindung zwischen den Sendeelementen 5 und dem jeweiligen zugeordneten Empfangselement 6 gegeben ist.

Die Strahlengänge 8 liegen alle vorzugsweise in einer gemeinsamen Ebene, die sich parallel zur Öffnungsebene der Austrittsöffnung und somit parallel zur Oberfläche des Innenverkleidungsteils erstreckt, an welchem die Detektionsvorrichtung 1 angeordnet ist. Der Detektionsbereich 2 liegt somit direkt an bzw. über dem Innenverkleidungsteil des Kraftfahrzeugs, so dass alle Gegenstände im Bereich des Innenverkleidungsteils zuverlässig detektiert werden können.

Wird mittels der genannten Auswerteeinrichtung ein Gegenstand detektiert, können verschiedenste Sicherheitsmaßnahmen im Kraftfahrzeug getroffen werden. Zum einen kann beispielsweise ein Airbag deaktiviert werden, in dessen Bereich sich der Gegenstand befindet. Zum anderen kann ergänzend oder alternativ auch ein Head-up-Display deaktiviert werden, um eine Verletzung der Fahrzeuginsassen durch Laserstrahlen zu verhindern, die an dem Gegenstand reflektiert werden können. Weiterhin ergänzend oder alternativ kann auch ein akustisches und/oder optisches Warnsignal im Innenraum des Kraftfahrzeugs mittels einer elektronischen Ausgabeeinrichtung ausgegeben werden, so dass der Fahrer entsprechend vor einer potentiellen Gefahr gewarnt wird.

Eine solche Detektionsvorrichtung 1, wie sie in Fig. 1 dargestellt ist, stellt quasi einen Lichtvorhang dar, der eine Vielzahl von Gabellichtschranken aufweist. Die Strahlengänge 8 erstrecken sich dabei parallel zueinander. Die Auflösung der Detektionsvorrichtung 1 kann somit ohne viel Aufwand durch Auswahl der entsprechenden Anzahl von Elementenpaaren jeweils aus einem Sendeelement 5 und einem Empfangselement 6 eingestellt werden. Sollen beispielsweise auch sehr kleine Gegenstände zuverlässig detektiert werden, kann die Anzahl der Elementenpaare entsprechend erhöht werden. Die Anzahl der in Fig. 1 dargestellten Elementenpaare 5, 6 ist dabei lediglich beispielhaft dargestellt und kann je nach Ausführungsbeispiel unterschiedlich gewählt werden.

Eine Detektionsvorrichtung 1 gemäß einer zweiten Ausführungsform der Erfindung ist in Fig. 2 dargestellt. Diese Detektionsvorrichtung 1 entspricht im Wesentlichen der Vorrichtung gemäß Fig. 1, wobei folgende Unterschiede gegeben sind: Sowohl die Sendeelemente 5 als auch die zugeordneten Empfangselementen 6 sind an dem ersten Bauteil 3 angeordnet. Das Bauteil 3 ist in zwei Hälften unterteilt, und die Sendeelemente 5 sind in der ersten Hälfte angeordnet, während die Empfangselemente 6 in der zweiten Hälfte angeordnet sind. Dies bedeutet, dass alle Sendeelemente 5 nebeneinander verteilt angeordnet sind und auch die Empfangselemente 6 alle nebeneinander liegen. Sie können aber auch auf eine andere Art und Weise verteilt angeordnet werden. An dem zweiten Bauteil 4 sind nun Reflexionselemente 9 angeordnet, an denen die jeweiligen Strahlen 7 reflektiert und in Richtung zu dem jeweils zugeordneten Empfangselement 6 umgelenkt werden. Es findet eine Totalreflexion statt, so dass die jeweiligen Strahlengänge 8 aus zwei Strecken 8a, 8b bestehen, die gleich lang sind. Die erste Strecke bzw. der erste Teilstrahlengang 8a verläuft zwischen dem Sendeelement 5 und dem zugeordneten Reflexionselement 9, während die zweite Strecke 8b zwischen dem Reflexionselement 9 und dem zugeordneten Empfangselement 6 verläuft.

Auch eine solche Detektionsvorrichtung 1 arbeitet nach dem Prinzip einer Lichtschranke, welche jedoch als "Reflexionslichtschranke" bezeichnet wird. Die Reflexion findet dabei unter einem Einfallswinkel statt, welcher beispielsweise in einem Wertebereich von 5° bis 25° liegen kann.

Die Reflexionselemente 9 können beispielsweise in Form von Spiegeln ausgebildet sein. Sie können separate Elemente sein. Alternativ kann jedoch auch vorgesehen sein, dass die gesamte, dem ersten Bauteil 3 zugewandete Fläche des zweiten Bauteils 4 mit einem solchen Spiegel versehen ist. Somit erübrigt sich dann auch die genaue Positionierung von einzelnen Reflexionselementen 9. Das Reflexionselement ist dann durch die Fläche des Bauteils 4 gebildet.

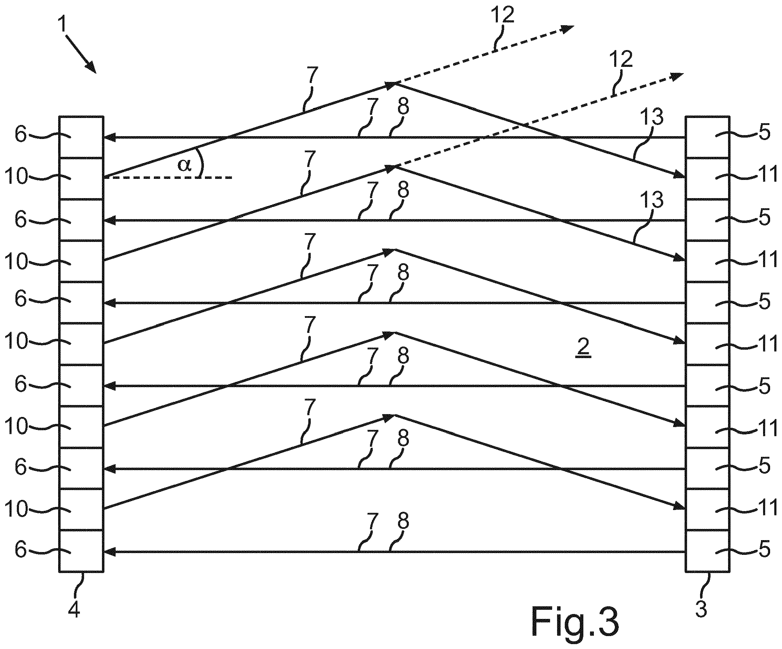

Eine Detektionsvorrichtung 1 gemäß einer dritten Ausführungsform der Erfindung ist in schematischer und abstrakter Darstellung in Fig. 3 gezeigt. Während mit den Detektionsvorrichtungen 1 gemäß den Fig. 1 und 2 lediglich Gegenstände detektiert werden können, die sich im Detektionsbereich 2 zwischen den Bauteilen 3, 4 befinden, kann die Detektionsvorrichtung 1 gemäß Fig. 3 zusätzlich auch Gegenstände detektieren, die sich über den Bauteilen 3, 4 befinden. Zu diesem Zwecke beinhaltet die Detektionsvorrichtung 1 zusätzliche Elementenpaare 10, 11 jeweils aus einem zusätzlichen Sendeelement 10 und einem zusätzlichen Empfangselement 11. Die Anordnung der "normalen" Elementenpaare 5, 6 entspricht hier der Ausführungsform gemäß Fig. 1, so dass die Vorrichtung 1 nach Art einer Gabellichtschranke ausgeführt ist.

Die zusätzlichen Sendeelemente 10 sind beispielsweise an dem zweiten Bauteil 4 derart verteilt angeordnet, dass sie abwechselnd mit den Empfangselementen 6 liegen. Dies bedeutet, dass zwischen zwei benachbarten Empfangselementen 6 jeweils ein zusätzliches Sendeelement 10 angeordnet ist. Die Empfangselemente 6 und die zusätzlichen Sendeelemente 10 können auch auf einer gemeinsamen Geraden liegen und insgesamt auch äquidistant verteilt angeordnet sein.

Entsprechend sind die zusätzlichen Empfangselemente 11 an dem ersten Bauteil 3 angeordnet. Auch eine umgekehrte Anordnung ist möglich, bei welcher die zusätzlichen Sendeelemente 10 an dem ersten Bauteil 3 und die zusätzlichen Empfangselemente 11 an dem zweiten Bauteil 4 angeordnet sind. Auch eine gemischte Anordnung kann vorgesehen sein, bei welcher einige der zusätzlichen Sendeelemente 10 an dem ersten Bauteil 3 und andere zusätzliche Sendeelemente 10 an dem zweiten Bauteil 4 liegen. Entscheidend ist nur, dass das zusätzliche Sendeelement 10 und Empfangselement 11 eines jeden Elementenpaares 10, 11 einander gegenüber angeordnet sind.

Die zusätzlichen Sendeelemente 10 senden elektromagnetische Strahlen 7 unter einem Winkel α bezüglich einer Ebene aus, welche durch die beiden Bauteile 3, 4 verläuft bzw. durch die Strahlengänge 8 definiert wird. Dies bedeutet auch, dass die Strahlen 7 unter einem Winkel α bezüglich der Oberfläche des Innenverkleidungsteils ausgesendet werden, an welchem die Detektionsvorrichtung 1 angeordnet ist. In Fig. 3 entspricht diese Referenzebene der Zeichnungsebene, so dass die Strahlen 7 quasi unter einem Winkel α bezüglich der Zeichnungsebene ausgesendet werden.

Befindet sich nun kein Gegenstand über den Bauteilen 3, 4, so breiten sich die durch die zusätzlichen Sendeelemente 10 ausgesendeten Strahlen 7 weiter aus, wie dies in Fig. 3 mit 12 angedeutet ist - es wird kein Strahl durch die zusätzlichen Empfangselemente 11 empfangen. Liegt hingegen ein Gegenstand über den Bauteilen 3, 4, so werden die Strahlen 7 der zusätzlichen Sendeelemente 10 an diesem Gegenstand reflektiert und zu dem jeweiligen Empfangselement 11 umgelenkt, wie dies in Fig. 3 mit 13 angedeutet ist. Umgekehrt als bei den Elementenpaaren 5, 6 werden die Strahlen 7 durch die zusätzlichen Empfangselemente 11 nur dann empfangen, wenn sich ein Gegenstand über den Bauteilen 3, 4 bzw. über der Detektionsvorrichtung 1 und über dem Innenverkleidungsteil befindet.

Somit können auch Gegenstände detektiert werden, die sich über dem Innenverkleidungsteil und somit in einem geringen Abstand zum Innenverkleidungsteil befinden, etwa über der Armaturentafel. Die Höhe, bis zu welcher die Detektion stattfindet, kann durch entsprechende Wahl des Winkels α eingestellt werden, unter welchem die Strahlen 7 durch die zusätzlichen Sendeelemente 10 ausgesendet werden.

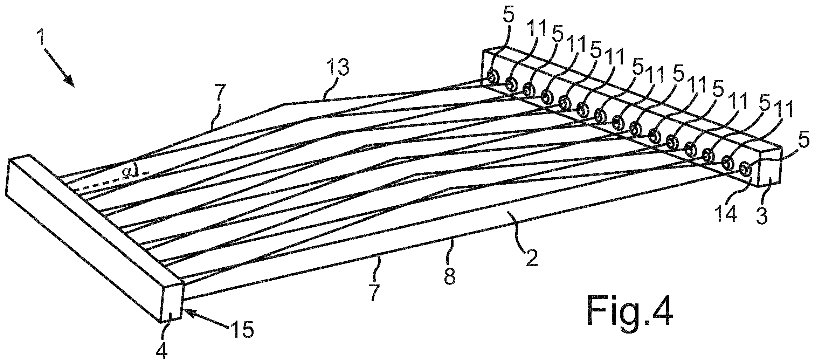

In Fig. 4 ist die Detektionsvorrichtung 1 gemäß der dritten Ausführungsform in perspektivischer Darstellung gezeigt. Wie aus Fig. 4 hervorgeht, können die Bauteile 3, 4 quaderförmig ausgebildet sein und sich parallel zueinander erstrecken. Die jeweiligen Sende- und Empfangselemente 5, 6, 10, 11 können dabei an jeweiligen Stirnseiten 14, 15 der Bauteile 3, 4 angeordnet sein, welche einander zugewandt sind. Durch entsprechende Wahl der Länge der Bauteile 3, 4 sowie durch Wahl des Abstands zwischen den Bauteilen 3, 4 kann die Größe des Detektionsbereichs 2 präzise definiert werden.

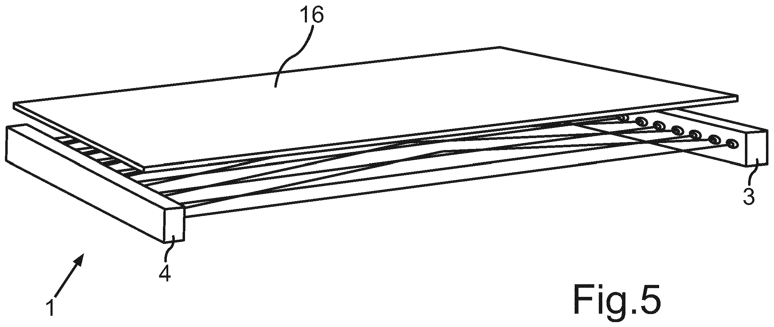

In Fig. 5 ist eine Situation dargestellt, bei welcher sich ein Gegenstand 16 über der Detektionsvorrichtung 1 befindet und beispielsweise auf den Bauteilen 3, 4 oder über diesen Bauteilen 3, 4 liegt. Eine solche Situation kann sich beispielsweise dann ergeben, wenn der Gegenstand 16 länger als der Abstand zwischen den Bauteilen 3, 4 ist. Die Detektion des Gegenstandes 16 erfolgt hier nicht mit Hilfe der Lichtschranken, sondern mittels der zusätzlichen Elementenpaare 10, 11.

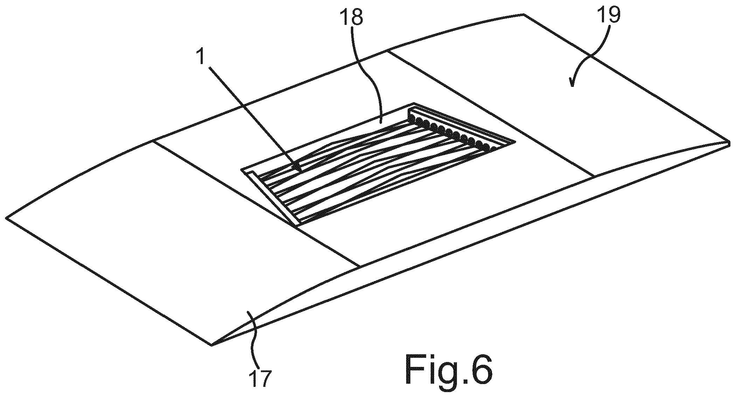

In Fig. 6 ist in schematischer Darstellung ein Bereich eines Innenverkleidungsteils 17 dargestellt, welches beispielsweise als Armaturenbrett bzw. Armaturentafel ausgebildet ist. In dem Innenverkleidungsteil 17 ist eine Aussparung oder Vertiefung 18 ausgeformt, in welcher die Detektionsvorrichtung 1 gemäß einer der beschriebenen Ausführungsformen aufgenommen ist. Diese Aussparung kann gegebenenfalls auch die genannte Austrittsöffnung darstellen oder die Austrittsöffnung kann in dieser Aussparung ausgebildet sein, nämlich im Boden der Aussparung 18. Die Tiefe der Aussparung 18 kann dabei wenige Millimeter betragen. Die Bauteile 3, 4 sind dabei an gegenüberliegenden Enden der Aussparung 18 angeordnet und können auch mit einer Oberfläche 19 des Innenverkleidungsteils 17 außerhalb der Vertiefung bündig abschließen. Der Detektionsbereich 2 überdeckt somit vollständig die Austrittsöffnung.

Wird nun ein Gegenstand in der Aussparung 18 des Innenverkleidungsteils 17 gelegt, wird dieser Gegenstand mittels der Elementenpaare 5, 6 detektiert. Wird hingegen ein größerer Gegenstand auf der Oberfläche 19 und somit über der Detektionsvorrichtung 1 gelegt, findet eine Detektion mittels der zusätzlichen Elementenpaare 10, 11 statt.

## Patentansprüche

1. Innenverkleidungsteil eines Kraftfahrzeugs mit einer Detektionsvorrichtung (1) zur Detektion eines an und/oder über dem Innenverkleidungsteil (17) im Bereich einer im Innenverkleidungsteil ausgebildeten Austrittsöffnung befindlichen Gegenstandes (16), wobei die Detektionsvorrichtung (1) einen Detektionsbereich (2) aufweist, in welchem der Gegenstand (16) in einer Erfassungsrichtung (8) der Detektionsvorrichtung (1) detektierbar ist,
**dadurch gekennzeichnet, dass**
die Erfassungsrichtung (8) zumindest im Wesentlichen parallel zu einer Öffnungsebene einer Austrittsöffnung für Strahlen eines Head-Up-Displays verläuft, wobei der Detektionsbereich (2) ein Bereich zwischen einer Armaturentafel und einer Windschutzscheibe des Kraftfahrzeugs ist.

2. Innenverkleidungsteil eines Kraftfahrzeugs mit einer Detektionsvorrichtung (1) nach Anspruch 1,
**dadurch gekennzeichnet, dass**
der Detektionsbereich (2) die Austrittsöffnung zumindest überwiegend, insbesondere vollständig, überdeckt.

3. Innenverkleidungsteil eines Kraftfahrzeugs mit einer Detektionsvorrichtung (1) nach einem der vorhergehenden Ansprüche,
**dadurch gekennzeichnet, dass**
die Detektionsvorrichtung (1) ein Sendeelement (5) zum Aussenden elektromagnetischer Strahlen (7) in den Detektionsbereich (2), ein Empfangselement (6) zum Empfangen zumindest eines Teils der Strahlen (7) und zum Bereitstellen eines Sensorsignals abhängig von den empfangenen Strahlen (7) und eine elektronische Auswerteeinrichtung aufweist, die dazu ausgelegt ist, abhängig von dem Sensorsignal den Gegenstand (16) im Detektionsbereich (2) zu detektieren.

4. Innenverkleidungsteil eines Kraftfahrzeugs mit einer Detektionsvorrichtung (1) nach Anspruch 3,
**dadurch gekennzeichnet, dass**
das Sendeelement (5) zum Aussenden der Strahlen (7) entlang eines vorgegebenen Strahlengangs (8) hin zum Empfangselement (6) ausgebildet ist, und dass die Strahlen (7) den Detektionsbereich (2) entlang des vorgegebenen Strahlengangs (8) nur dann durchlaufen und auf das Empfangselement (6) einfallen, falls sich kein Gegenstand (16) im vorgegebenen Strahlengang (8) befindet.

5. Innenverkleidungsteil eines Kraftfahrzeugs mit einer Detektionsvorrichtung (1) nach Anspruch 4,
**dadurch gekennzeichnet, dass**
sich der vorgegebene Strahlengang (8) entlang, insbesondere parallel zu, einer Oberfläche (19) des Innenverkleidungsteils (17) und/oder parallel zur Öffnungsebene der Austrittsöffnung erstreckt.

6. Innenverkleidungsteil eines Kraftfahrzeugs mit einer Detektionsvorrichtung (1) nach einem der vorhergehenden Ansprüche,
**dadurch gekennzeichnet, dass**
das Innenverkleidungsteil (17) eine Armaturentafel des Kraftfahrzeugs ist.

7. Innenverkleidungsteil eines Kraftfahrzeugs mit einer Detektionsvorrichtung (1) nach einem der vorhergehenden Ansprüche,
**dadurch gekennzeichnet, dass**
eine Auswerteeinrichtung dazu ausgelegt ist, nach Detektion des Gegenstands (16) in dem Detektionsbereich (2):
- ein Steuersignal zum Deaktivieren zumindest einer Komponente des Kraftfahrzeugs nämlich einer Projektionsanzeigeeinrichtung zu erzeugen und/oder
- ein Warnsignal mittels einer Ausgabeeinrichtung auszugeben.

8. Innenverkleidungsteil eines Kraftfahrzeugs mit einer Detektionsvorrichtung (1) nach einem der Ansprüche 4 bis 7,
**dadurch gekennzeichnet, dass**
ein Sendeelement (5) und ein Empfangselement (6) einander gegenüber in direkter Sichtverbindung angeordnet sind und der vorgegebene Strahlengang (8) geradlinig verläuft.

9. Innenverkleidungsteil eines Kraftfahrzeugs mit einer Detektionsvorrichtung (1) nach einem der Ansprüche 4 bis 10,
**dadurch gekennzeichnet, dass**
die Detektionsvorrichtung (1) ein Reflektionselement (9) zum Umlenken der Strahlen (7) in Richtung zum Empfangselement (6) aufweist.

10. Innenverkleidungsteil eines Kraftfahrzeugs mit einer Detektionsvorrichtung (1) nach einem der vorhergehenden Ansprüche,
**dadurch gekennzeichnet, dass**
die Detektionsvorrichtung (1) eine Vielzahl von Elementenpaaren (5, 6) jeweils aus einem optischen Sendeelement (5) und einem optischen Empfangselement (6) aufweist, wobei zwischen dem Sendeelement (5) und dem Empfangselement (6) jedes Elementenpaares (5, 6) jeweils ein Strahlengang (8) von dem Sendeelement (5) hin zum Empfangselement (6) vorgegeben ist, sodass die Strahlen (7) den Detektionsbereich (2) entlang des jeweiligen vorgegebenen Strahlengangs (8) nur dann durchlaufen und auf das jeweilige Empfangselement (6) einfallen, falls sich kein Gegenstand (16) im jeweiligen Strahlengang (8) befindet.

11. Innenverkleidungsteil eines Kraftfahrzeugs mit einer Detektionsvorrichtung (1) nach Anspruch 10,
**dadurch gekennzeichnet, dass**
die Strahlengänge (8) der Vielzahl von Elementenpaaren (5, 6) in einer gemeinsamen Ebene und/oder parallel zur Öffnungsebene der Austrittsöffnung und/oder parallel zu einer Oberfläche (19) des Innenverkleidungsteils (17) liegen.

12. Innenverkleidungsteil eines Kraftfahrzeugs mit einer Detektionsvorrichtung (1) nach Anspruch 10 oder 11,
**dadurch gekennzeichnet, dass**
die Strahlengänge (8) der Vielzahl von Elementenpaaren (5, 6) parallel zueinander verlaufen.

13. Innenverkleidungsteil eines Kraftfahrzeugs mit einer Detektionsvorrichtung (1) nach einem der vorhergehenden Ansprüche,
**dadurch gekennzeichnet, dass**
die Detektionsvorrichtung (1) zwei einander gegenüberliegende, insbesondere länglich ausgeführte, Bauteile (3, 4) aufweist und ein Sendeelement (5), insbesondere die Vielzahl von Sendeelementen (5), in ein erstes der Bauteile (3, 4) integriert ist, wobei ein Empfangselement (6), insbesondere die Vielzahl von Empfangselementen (6), in ein zweites der Bauteile (3, 4) oder in das erste Bauteil (3, 4) integriert ist.

14. Innenverkleidungsteil eines Kraftfahrzeugs mit einer Detektionsvorrichtung (1) nach einem der vorhergehenden Ansprüche,
**dadurch gekennzeichnet, dass**
die Detektionsvorrichtung (1) ein zusätzliches Sendeelement (10), welches zum Aussenden elektromagnetischer Strahlen (7) unter einem Winkel (α) größer 0° bezüglich der Öffnungsebene, insbesondere bezüglich des vorgegebenen Strahlengangs (8), noch bevorzugter bezüglich einer die Vielzahl von Strahlengängen (8) umfassenden Ebene, ausgebildet ist, und ein zusätzliches Empfangselement (11) aufweist, welches dazu ausgebildet ist, die durch das zusätzliche Sendeelement (10) ausgesendeten Strahlen (7) nur dann zu empfangen, falls diese Strahlen (7) an dem Gegenstand (16) reflektiert werden.

15. Kraftfahrzeug mit einem Innenverkleidungsteil (17), insbesondere einer Armaturentafel, und mit einer Detektionsvorrichtung (1) nach einem der vorhergehenden Ansprüche.

16. Verfahren zur Detektion eines an und/oder über einem Innenverkleidungsteil (17) eines Kraftfahrzeugs im Bereich einer im Innenverkleidungsteil ausgebildeten Austrittsöffnung befindlichen Gegenstandes (16) mittels einer Detektionsvorrichtung (1), welche einen Detektionsbereich (2) aufweist, in welchem der Gegenstand (16) in einer Erfassungsrichtung (8) der Detektionsvorrichtung (1) detektiert wird,
**dadurch gekennzeichnet, dass**
die Erfassungsrichtung (8) zumindest im Wesentlichen parallel zu einer Öffnungsebene einer Austrittsöffnung für Strahlen eines Head-Up-Displays verläuft, wobei ein Bereich zwischen einer Armaturentafel und einer Windschutzscheibe des Kraftfahrzeugs als Detektionsbereich (2) bereitgestellt wird.

17. Verfahren nach Anspruch 16,
**dadurch gekennzeichnet, dass**
mittels eines Sendeelements (5) elektromagnetische Strahlen (7) in den Detektionsbereich (2) ausgesendet werden, mittels eines Empfangselements (6) zumindest ein Teil der Strahlen (7) empfangen ein Sensorsignal abhängig von den empfangenen Strahlen (7) bereitgestellt wird und mittels einer elektronischen Auswerteeinrichtung der Gegenstand (16) im Detektionsbereich (2) abhängig von dem Sensorsignal detektiert wird, wobei das Sendeelement (5) die Strahlen (7) entlang eines den Detektionsbereich (2) definierenden vorgegebenen Strahlengangs (8) hin zum Empfangselement (6) aussendet, und dass die Strahlen (7) den Detektionsbereich (2) entlang des vorgegebenen Strahlengangs (8) nur dann durchlaufen und auf das Empfangselement (6) einfallen, falls sich kein Gegenstand (16) im Detektionsbereich (2) befindet.

## Claims

1. Inner panel part of a motor vehicle having a detection device (1) for detecting an object (16), which is located on and/or above the inner panel part (17) in the region of an exit opening implemented in the inner panel part, wherein the detection device (1) has a detection region (2), in which the object (16) is detectable in an acquisition direction (8) of the detection device (1),
**characterized in that** the acquisition direction (8) extends at least essentially in parallel to an opening plane of an exit opening for beams of a heads-up display, wherein the detection region (2) is a region between a dashboard and a windshield of the motor vehicle.

2. Inner panel part of a motor vehicle having a detection device (1) according to Claim 1,
**characterized in that** the detection region (2) at least predominantly, in particular completely, overlaps the exit opening.

3. Inner panel part of a motor vehicle having a detection device (1) according to either one of the preceding claims,
**characterized in that** the detection device (1) has a transmitting element (5) for emitting electromagnetic beams (7) into the detection region (2), a receiving element (6) for receiving at least a part of the beams (7) and for providing a sensor signal in dependence on the received beams (7), and an electronic analysis unit, which is designed to detect the object (16) in the detection region (2) in dependence on the sensor signal.

4. Inner panel part of a motor vehicle having a detection device (1) according to Claim 3, **characterized in that** the transmitting element (5) is implemented for emitting the beams (7) along a predefined beam path (8) toward the receiving element (6), and the beams (7) pass through the detection region (2) along the predefined beam path (8) and are incident on the receiving element (6) only if no object (16) is located in the predefined beam path (8).

5. Inner panel part of a motor vehicle having a detection device (1) according to Claim 4, **characterized in that** the predefined beam path (8) extends along, in particular in parallel to, a surface (19) of the inner panel part (17) and/or in parallel to the opening plane of the exit opening.

6. Inner panel part of a motor vehicle having a detection device (1) according to any one of the preceding claims,
**characterized in that** the inner panel part (17) is a dashboard of the motor vehicle.

7. Inner panel part of a motor vehicle having a detection device (1) according to any one of the preceding claims,
**characterized in that** an analysis unit is designed, after detection of the object (16) in the detection region (2):
- to generate a control signal for deactivating at least one component of the motor vehicle, in particular a projection display unit, and/or
- to output a warning signal by means of an output unit.

8. Inner panel part of a motor vehicle having a detection device (1) according to any one of Claims 4 to 7,
**characterized in that** a transmitting element (5) and a receiving element (6) are arranged opposite to one another in a direct line-of-sight connection and the predefined beam path (8) extends linearly.

9. Inner panel part of a motor vehicle having a detection device (1) according to any one of Claims 4 to 10,
**characterized in that** the detection device (1) has a reflection element (9) for deflecting the beams (7) in the direction toward the receiving element (6).

10. Inner panel part of a motor vehicle having a detection device (1) according to any one of the preceding claims,
**characterized in that** the detection device (1) has a plurality of element pairs (5, 6), each made of an optical transmitting element (5) and an optical receiving element (6), wherein a beam path (8) from the transmitting element (5) toward the receiving element (6) is specified in each case between the transmitting element (5) and the receiving element (6) of each element pair (5, 6), so that the beams (7) pass through the detection region (2) along the respective predefined beam path (8) and are incident on the respective receiving element (6) only if no object (16) is located in the respective beam path (8).

11. Inner panel part of a motor vehicle having a detection device (1) according to Claim 10,
**characterized in that** the beam paths (8) of the plurality of element pairs (5, 6) lie in a shared plane and/or in parallel to the opening plane of the exit opening and/or in parallel to a surface (19) of the inner panel part (17).

12. Inner panel part of a motor vehicle having a detection device (1) according to Claim 10 or 11,
**characterized in that** the beam paths (8) of the plurality of element pairs (5, 6) extend in parallel to one another.

13. Inner panel part of a motor vehicle having a detection device (1) according to any one of the preceding claims,
**characterized in that** the detection device (1) has two components (3, 4), which are located opposite to one another and are embodied as oblong in particular, and a transmitting element (5), in particular the plurality of transmitting elements (5), is integrated in a first of the components (3, 4), wherein a receiving element (6), in particular the plurality of receiving elements (6), is integrated in a second of the components (3, 4) or in the first component (3, 4).

14. Inner panel part of a motor vehicle having a detection device (1) according to any one of the preceding claims,
**characterized in that** the detection device (1) has an additional transmitting element (10), which is implemented for emitting electromagnetic beams (7) at an angle (α) greater than 0° in relation to the opening plane, in particular in relation to the predefined beam path (8), more preferably in relation to a plane comprising the plurality of beam paths (8), and has an additional receiving element (11), which is implemented to receive the beams (7) emitted by the additional transmitting element (10) only if these beams (7) are reflected on the object (16).

15. Motor vehicle having an inner panel part (17), in particular a dashboard, and having a detection device (1) according to any one of the preceding claims.

16. Method for detecting an object (16), which is located on and/or above an inner panel part (17) of a motor vehicle in the region of an exit opening implemented in the inner panel part, by means of a detection device (1), which has a detection region (2), in which the object (16) is detected in an acquisition direction (8) of the detection device (1),
**characterized in that** the acquisition direction (8) extends at least essentially in parallel to an opening plane of an exit opening for beams of a heads-up display, wherein a region between a dashboard and a windshield of the motor vehicle is provided as detection region (2).

17. Method according to Claim 16,
**characterized in that** electromagnetic beams (7) are emitted into the detection region (2) by means of a transmitting element (5), at least a part of the beams (7) are received by means of a receiving element (6), a sensor signal is provided in dependence on the received beams (7), and the object (16) is detected in the detection region (2) in dependence on the sensor signal by means of an electronic analysis unit, wherein the transmitting element (5) emits the beams (7) along a predefined beam path (8), which defines the detection region (2), toward the receiving element (6), and the beams (7) pass through the detection region (2) along the predefined beam path (8) and are incident on the receiving element (6) only if no object (16) is located in the detection region (2).

## Revendications

1. Pièce d'habillage intérieur d'un véhicule automobile comportant un dispositif de détection (1) destiné à détecter un objet (16) se trouvant sur et/ou au-dessus de la pièce d'habillage intérieur (17) dans la région d'une ouverture de sortie réalisée dans la pièce d'habillage intérieur, dans lequel le dispositif de détection (1) comporte une région de détection (2) dans laquelle l'objet (16) peut être détecté dans une direction de détection (8) du dispositif de détection (1),
**caractérisée en ce que** la direction de détection (8) s'étend au moins sensiblement parallèlement à un plan d'ouverture d'une ouverture de sortie destinée aux faisceaux d'un afficheur tête haute, dans lequel la région de détection (2) est une région située entre un tableau de bord et un pare-brise du véhicule automobile.

2. Pièce d'habillage intérieur d'un véhicule automobile comportant un dispositif de détection (1) selon la revendication 1,
**caractérisée en ce que** la région de détection (2) recouvre au moins principalement, notamment entièrement, l'ouverture de sortie.

3. Pièce d'habillage intérieur d'un véhicule automobile comportant un dispositif de détection (1) selon l'une quelconque des revendications précédentes,
**caractérisée en ce que** le dispositif de détection (1) comporte un élément d'émission (5) destiné à émettre des faisceaux électromagnétiques (7) dans la région de détection (2), un élément de réception (6) destiné à recevoir au moins une partie des faisceaux (7) et à fournir un signal de capteur en fonction des faisceaux reçus (7), et un dispositif d'évaluation électronique conçu pour détecter l'objet (16) dans la région de détection (2) en fonction du signal de capteur.

4. Pièce d'habillage intérieur d'un véhicule automobile comportant un dispositif de détection (1) selon la revendication 3,
**caractérisée en ce que** l'élément d'émission (5) est réalisé de manière à émettre les faisceaux (7) le long d'un chemin de faisceau prédéterminé (8) vers l'élément de réception (6), et **en ce que** les faisceaux (7) ne se propagent à travers la région de détection (2) le long du chemin de faisceau prédéterminé (8) et ne sont incidents sur l'élément de réception (6) que dans le cas où aucun objet (16) ne se trouve sur le chemin de faisceau prédéterminé (8).

5. Pièce d'habillage intérieur d'un véhicule automobile comportant un dispositif de détection (1) selon la revendication 4,
**caractérisée en ce que** se le chemin de faisceau prédéterminé (8) s'étend le long d'une surface (19) de la pièce d'habillage intérieur (17), notamment parallèlement à celle-ci, et/ou parallèlement au plan d'ouverture de l'ouverture de sortie.

6. Pièce d'habillage intérieur d'un véhicule automobile comportant un dispositif de détection (1) selon l'une quelconque des revendications précédentes, **caractérisée en ce que** la pièce d'habillage intérieur (17) est un tableau de bord du véhicule automobile.

7. Pièce d'habillage intérieur d'un véhicule automobile comportant un dispositif de détection (1) selon l'une quelconque des revendications précédentes, **caractérisée en ce qu'**un dispositif d'évaluation est conçu, après la détection de l'objet (16) dans la région de détection (2), pour :
- générer un signal de commande destiné à désactiver au moins un composant du véhicule automobile, à savoir un dispositif d'affichage à projection, et/ou
- délivrer un signal d'alarme au moyen d'un dispositif de sortie.

8. Pièce d'habillage intérieur d'un véhicule automobile comportant un dispositif de détection (1) selon l'une quelconque des revendications 4 à 7,
**caractérisée en ce qu'**un élément d'émission (5) et un élément de réception (6) sont disposés en vue directe l'un de l'autre et **en ce que** le chemin de faisceau prédéterminé (8) s'étend en ligne droite.

9. Pièce d'habillage intérieur d'un véhicule automobile comportant un dispositif de détection (1) selon l'une quelconque des revendications 4 à 10,
**caractérisée en ce que** le dispositif de détection (1) comporte un élément de réflexion (9) destiné à dévier les faisceaux (7) dans la direction de l'élément de réception (6).

10. Pièce d'habillage intérieur d'un véhicule automobile comportant un dispositif de détection (1) selon l'une quelconque des revendications précédentes,
**caractérisée en ce que** le dispositif de détection (1) comporte une pluralité de paires d'éléments (5, 6) respectivement constituées d'un élément d'émission optique (5) et d'un élément de réception optique (6), dans lequel un chemin de faisceau (8) allant de l'élément d'émission (5) à l'élément de réception (6) est respectivement prédéterminé entre l'élément d'émission (5) et l'élément de réception (6) de chaque paire d'éléments (5, 6), de manière ce que les faisceaux (7) ne se propagent à travers la région de détection (2) le long du chemin de faisceau prédéterminé respectif (8) et ne soient incidents sur l'élément de réception respectif (6) que dans le cas où aucun objet (16) ne se trouve sur le chemin de faisceau respectif (8).

11. Pièce d'habillage intérieur d'un véhicule automobile comportant un dispositif de détection (1) selon la revendication 10,
**caractérisée en ce que** les chemins de faisceaux (8) de la pluralité de paires d'éléments (5, 6) se situent dans un plan commun et/ou parallèlement au plan d'ouverture de l'ouverture de sortie et/ou parallèlement à une surface (19) de la pièce d'habillage intérieur (17).

12. Pièce d'habillage intérieur d'un véhicule automobile comportant un dispositif de détection (1) selon la revendication 10 ou 11,
**caractérisée en ce que** les chemins de faisceaux (8) de la pluralité de paires d'éléments (5, 6) s'étendent parallèlement les uns aux autres.

13. Pièce d'habillage intérieur d'un véhicule automobile comportant un dispositif de détection (1) selon l'une quelconque des revendications précédentes,
**caractérisée en ce que** le dispositif de détection (1) comporte deux composants (3, 4) opposés l'un à l'autre, notamment réalisés de manière allongée, et **en ce qu'**un élément d'émission (5), notamment la pluralité des éléments d'émission (5), est intégré à un premier des composants (3, 4), dans lequel un élément de réception (6), notamment la pluralité des éléments de réception (6), est intégré à un deuxième des composants (3, 4) ou au premier composant (3, 4).

14. Pièce d'habillage intérieur d'un véhicule automobile comportant un dispositif de détection (1) selon l'une quelconque des revendications précédentes,
**caractérisée en ce que** le dispositif de détection (1) comporte un élément d'émission supplémentaire (10), qui est réalisé pour émettre des faisceaux électromagnétiques (7) sous un angle (α) supérieur à 0° par rapport au plan d'ouverture, notamment par rapport au chemin de faisceau prédéterminé (8), plus préférablement par rapport à un plan comprenant la pluralité de chemins de faisceaux (8), et un élément de réception supplémentaire (11) qui est conçu pour ne recevoir les faisceaux émis (7) par l'élément d'émission supplémentaire (10) que dans le cas où lesdits faisceaux (7) sont réfléchis sur l'objet (16).

15. Véhicule automobile comportant une pièce d'habillage intérieur (17), notamment un tableau de bord, et comportant un dispositif de détection (1) selon l'une quelconque des revendications précédentes.

16. Procédé destiné à détecter un objet (16) se trouvant sur et/ou au-dessus d'une pièce d'habillage intérieur (17) d'un véhicule automobile dans la région d'une ouverture de sortie réalisée dans la pièce d'habillage intérieur au moyen d'un dispositif de détection (1) qui comporte une région de détection (2) dans laquelle l'objet (16) est détecté dans une direction de détection (8) du dispositif de détection (1),
**caractérisé en ce que** la direction de détection (8) s'étend au moins sensiblement parallèlement à un plan d'ouverture d'une ouverture de sortie destinée aux faisceaux d'un afficheur tête haute, dans lequel une région située entre un tableau de bord et un pare-brise du véhicule automobile est prévue en tant que région de détection (2).

17. Procédé selon la revendication 16,
**caractérisé en ce que** des faisceaux électromagnétiques (7) sont émis dans la région de détection (2) au moyen d'un élément d'émission (5), **en ce qu'**au moins une partie des faisceaux (7) est reçue au moyen d'un élément de réception (6), **en ce qu'**un signal de capteur est fourni en fonction des faisceaux reçus (7) et **en ce que** l'objet (16) est détecté dans la région de détection (2) en fonction du signal de capteur au moyen d'un dispositif d'évaluation électronique, dans lequel l'élément d'émission (5) émet les faisceaux (7) le long d'un chemin de faisceau prédéterminé (8) définissant la région de détection (2) vers l'élément de réception (6), et **en ce que** les faisceaux (7) ne se propagent à travers la région de détection (2) le long du chemin de faisceau prédéterminé (8) et ne sont incidents sur l'élément de réception (6) que dans le cas où aucun objet (16) ne se trouve dans la région de détection (2).
